(19) Europäisches Patentamt / European Patent Office / Office européen des brevets

(11) **EP 2 389 563 B1**

(12) **EUROPEAN PATENT SPECIFICATION**

(45) Date of publication and mention
of the grant of the patent:
**24.06.2015 Bulletin 2015/26**

(21) Application number: **09703001.9**

(22) Date of filing: **17.01.2009**

(51) Int Cl.:
**G01D 5/14** (2006.01)

(86) International application number:
**PCT/IB2009/050167**

(87) International publication number:
**WO 2009/090620 (23.07.2009 Gazette 2009/30)**

(54) **METHOD FOR MAGNETIC CONTACTLESS MEASUREMENT OF ANGULAR POSITIONS**

VERFAHREN ZUR MAGNETISCHEN KONTAKTLOSEN MESSUNG VON WINKELPOSITIONEN

PROCEDE DE MESURE SANS CONTACT MAGNETIQUE DE POSITIONS ANGULAIRES

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**30.11.2011 Bulletin 2011/48**

(73) Proprietor: **C-Sigma S.R.L.
23900 Lecco (IT)**

(72) Inventor: **GHISLANZONI, Luca
I-23900 Lecco (IT)**

(56) References cited:
**EP-A- 0 798 541        EP-A- 1 241 437
DE-A1-102004 060 920    US-A- 4 746 859
US-A- 5 789 917         US-A- 5 861 745
US-A1- 2004 217 758     US-A1- 2005 046 418
US-B1- 6 556 005        US-B1- 6 593 734**

**Description**

This invention describes a method, and various apparatuses implementing said method, for the contactless measurement of angular and linear positions by means of magnetic fields.

In particular, the disclosed method addresses position sensors of the kind defined in the preamble of claim 1.

EP 0 798 541 A1 discloses a magnetic position sensor of said kind, comprising a magnetic circuit composed of a permanent magnet and fixed and moving ferromagnetic parts, which are arranged as to generate two magnetic fields, B1 in one airgap of said magnetic circuit, and B2 in another airgap of said magnetic circuit, each one of which is a function of the moving part position with respect to the fixed part, and whose sum is substantially a constant value.

The position is then measured by computing the value of the relative differential measurement (B1-B2) / (B1+B2), greatly reducing sensitivity to variations in temperature.

The present invention addresses the problem of simplifying the calculation of the B1 /(B1+B2), and-or of the B2 / (B1+B2), ratio by means of a feedback loop arranged so as to control the common supply of two ratiometric magnetic field sensors, in such a way as to force to a constant value the sum of their respective output signals.

A typical approach to magnetic contactless measurement of position would consist in placing a magnetic field sensor in an airgap whose geometry changes as a function of the angular or linear displacement to be measured. Said change of geometry is arranged as to result in a corresponding change in the value of the magnetic field, B, as measured by said magnetic field sensor. The change in the B field value can be obtained by either varying the length of the airgap, or its cross-section, or both, as a function of the displacement in position. The straight implementation of such basic approaches is rather obvious, being just a matter to devise magnetic circuit configurations such that the value of B is a direct function of the relative position of the composing parts. The simplest and most robust way to generate the required magnetic field would then make use of permanent magnets. Unfortunately things are not that straightforward, as the working point of low cost permanent magnets (PMs) is heavily affected by temperature, by naturally occurring demagnetization effects and variations in magnetic circuit's total reluctance.

To counteract the inaccuracies inherent to said trivial implementations, more sophisticated techniques have been developed, as disclosed for example in the cited EP 0 798 541 A1. Magnetic field values are often measured by means of Hall probes, which generate an output voltage, Vh (V), proportional to the value of the biasing current, Ib (A), and to the magnetic field, B (Tesla), through the factor of proportionality, Kh (sensitivity, with units V/AT):

$$Vh = Kh * Ib * B \qquad (1)$$

The method and apparatuses described in the following description make use of Hall probes for the measurement of B field values, however, the use of magnetoresitive type of sensors is also possible. Most commercially available magnetoresitive sensors are of the Wheatstone bridge type, generating an output voltage, Vm (mV), proportional to the value of the biasing voltage, Vb (V), and of the magnetic field, B (Tesla), through the factor of proportionality, Km (sensitivity, with units (mV/V)/(kA/m) ):

$$Vm = Km * Vb * B \qquad (2)$$

It shall be remarked that at the present state of the art most commercially available magnetoresitive bridge sensors are optimised for the measurement of relatively low B field values (few tens of mT), whereas Hall effect probes are better at the measurement of higher B field values (few hundreds mT). As the magnetic circuit configurations herewith described can easily achieve airgap B field values of few hundreds mT, and hence decreasing the relative importance of inaccuracies introduced by external stray fields, preference will be given to the use of Hall effect probes. In case it might turn out that for some applications also magnetorestive sensors becomes interesting, or that suitable magnetoresistive sensors might become commercially available, those skilled in the art can then easily imagine obvious way to replace said Hall probes with said magnetoresistive sensors.

Differently from the method disclosed in D1, which is based on the differential relative measurement (B1-B2) / (B1+B2), the method and apparatuses detailed in the following description make use of magnetic circuit configurations arranged in ways that the measurement of position corresponds to the simple ratio, **B1/B2**, between the B field values measured by two separate sensors, located in two separate airgaps. If said **B1/B2 ratio** is furthermore made dependent on geometric relationships only, then drifts of the PM's working point would automatically cancel out (appearing both at numerator and denominator). To achieve this result two basic magnetic circuit configurations are possible: parallel configuration, series configuration.

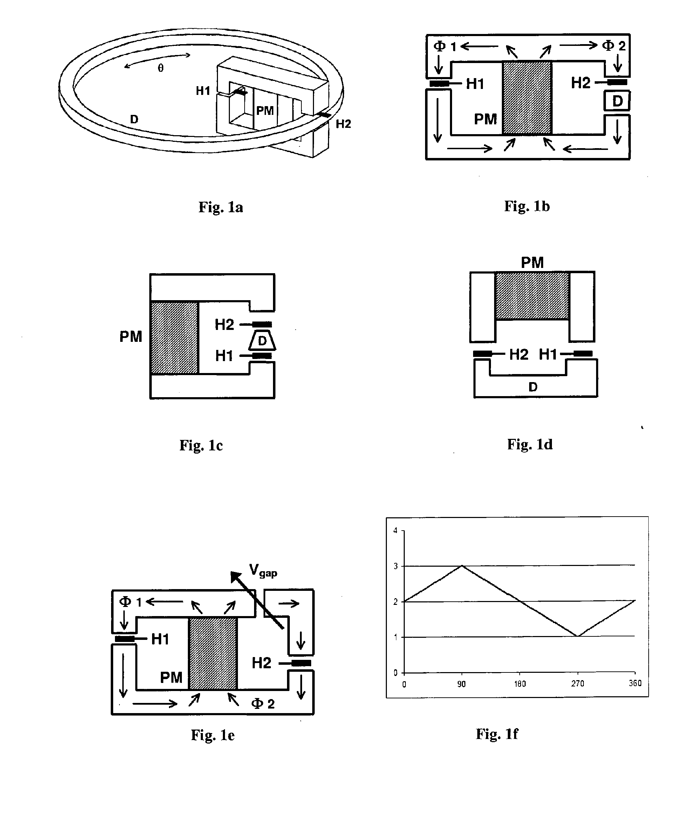

Figure 1a schematically depicts an example of parallel configuration, and whose relevant cross-section is displayed in Figure 1b.

It can be readily verified that said F the PM's Magnetomotive Force at any particular working point, the two parallel branches will experience magnetic fluxes $\phi1$ and $\phi2$, defined respectively by $\phi1 = F / R1$ and $\phi2 = F / R2$, where R1 and R2 are the respective reluctances (largely dominated by the length of the respective airgaps). Considering that $B = \phi / S$, the voltage values generated by the Hall probes H1 and H2 are respectively:

$$Vh1 = Kh1 * Ib * F / (R1*S1) \qquad Vh2 = Kh2 * Ib * F / (R2*S2) \qquad (3)$$

where S1 and S2 are the effective areas (effective areas are computed taking into account also border effects) of the airgap cross-sections coplanar with the respective Hall probes. If both Hall sensors are serially supplied with the same biasing current Ib (or magnetoresitive bridges are parallel supplied by the same biasing voltage Vb), by taking the ratio between the two Hall voltages, we finally have:

$$Vh1 / Vh2 = Kh1 / Kh2 * B1 / B2 = Kh1 / Kh2 * R2 / R1 * S2 / S1 \qquad (4)$$

i.e.: a value which is completely independent from the value of the Magnetomotive Force F corresponding to that particular working point. It shall be noted that Kh1/ Kh2 is explicitly maintained in the above expression, as Hall effect sensors of the same type (such as for example the KSY14 from Infineon) might differ in their sensitivity value. Hence, allowance for individual calibrations shall be foreseen, for example to be carried out during manufacturing by adjusting the gain of a pre-amplifier, or by means of simple resistive networks selected on test. Furthermore, dependence from sensitivity through the ratio Kh1/ Kh2 implies that a large part of the dependence on temperature of the sensitivity is also inherently compensated, the ratio of the two sensitivities being much less dependent on temperature than each of the sensitivities taken individually. The same considerations apply to any long-term effect resulting in degradation of sensitivity with time, such as for example total radiation dose, aging effects, and the like, provided that H1 and H2 are sensors of the same type (generally, sensors of the same type degrade the same way). Therefore, by choosing the same type of sensor for both H1 and H2, the ratio Kh1 / Kh2 can be approximated by a constant value, const, largely independent from temperature and degradation effects, and equal to 1 for the ideal case Kh1 = Kh2 corresponding to matched sensors, hence:

$$Vh1 / Vh2 = const * B1 / B2 = const * R2 \, S2 / R1 \, S1 \qquad (5)$$

Making it explicit that the measurement of position, obtained by computing the ratio Vh1 / Vh2, is a function of geometric relationships only, as represented by the ratio R2 S2/R1 S1.

In figure 1a, D is a ring of ferromagnetic material, whose thickness varies along its circumference. In this way, by rotating the ring relatively to the magnetic circuit, the total length of airgap 2 will vary, and consequently also the value of R2, as a function of the angle of rotation $\theta$. The cross-section example depicted in figure 1b schematically represents the equivalent magnetic circuit when ring D is rotated to an angular position corresponding to its maximum thickness being located in airgap 2. By suitably machining said ring D (carefully taking into account also the so called "border effects") it is then possible to obtain an output signal *Vh1 / Vh2, which* is a function of the rotation angle $\theta$. The present invention is not concerned with the particular shape of ring D, as several different shapes may exist, but that all yield the same form for the output function. Let us take the example of an application for which a triangle output signal is required, the corresponding R2 S2 / R1 S1 ratio can be obtained in several different ways:

a) by holding constant the geometry of airgap 1, so that the product R1 S1 is also constant, and by linearly increasing the thickness of ring D between 0 and 180°, while its width is held constant, to then linearly decrease it between 180° and 360° (of course, introducing corrections to compensate for border effects), the product R2 S2 will be a linear function of $\theta$;
b) as above, but holding constant the thickness of the ring, to then vary its width;
c) any suitable combination of a) and b)
d) it is also possible to add a second ring, concentric to the first one and passing through airgap 1, so that now the ratio R2 S2 / R1 S1 can be modulated by varying the geometry of both airgap 1 and airgap 2 at the same time, as to obtain the desired triangle form for the output function.

The cross-section schematically represented in figure 1c represents instead an example of series configuration, whereby both airgaps see the same magnetic flux $\phi$ (provided that the magnetic circuit is arranged as to reduce leakage flux to negligible values). In such case ring D is shaped as to concentrate $\phi$ into a smaller area at the cross-section coplanar with sensor H2. In this way the B value measured by H2, B2 = $\phi$ / S2, is larger than the one measured by H1, B1 = $\phi$/S1. For a series configuration it will hence be:

$$Vh1 / Vh2 = const * B1 / B2 = const * S2 / S1 \qquad (6)$$

Therefore, also in this case the ratio Vh1 / Vh2 is a function of geometric relationships only. By properly machining ring D, so that the ratio S2 /S1 is a suitable function of angular position, it is then possible to obtain the desired form for the output function.

Figure 1d depicts one more example of series configuration, whereby ring D features a C shaped cross-section, whose parameters vary along the circumference as to obtain a S2 / S1 ratio with the desired dependency from angular position.

Demonstrated that Vh1 / Vh2 can be made to be function of geometric parameters only, through the ratio B1/B2 = R2 S2 / R1 S1 for the parallel configuration, and the ratio B1/B2 = S1/S2 for the series configuration, in the following we will more simply refer to the **"B1/B2 Ratio"**, making it implicit that it will always be possible to identify a geometric configuration such that said **"B1/B2 Ratio"** is a suitable function of the position coordinate to be measured. For some applications, an output signal which is a linear function $\theta$ is preferred, and which might take the form of a triangle function, such as the example of Figure 1f (for this example the signal conditioning electronics generate an output signal linearly varying between 1V and 3V), or a of a saw tooth function. For some other applications, an output signal which is a sinus function of $\theta$ could instead be preferred. Each particular choice for the form of the output function has its own set of advantages and drawbacks, and which are already well known. Those skilled in the art would then choose the type of function that best suits a particular application.

It can additionally be remarked that choosing functions of the sinus or triangle form implies that the output signal at angle $\theta$ would be identical to the value of the output signal at $\theta$ + 180° . To resolve such ambiguity a second magnetic circuit could be located 90° further along ring D.

In this way, for the applications requiring a triangle function output a second 90° phase shifted triangle signal would be available. For the applications requiring an output sine function, the 90° phase shifted signal would coincide with a cosine function, so that industry standard SIN-COS type of output signals can be obtained.

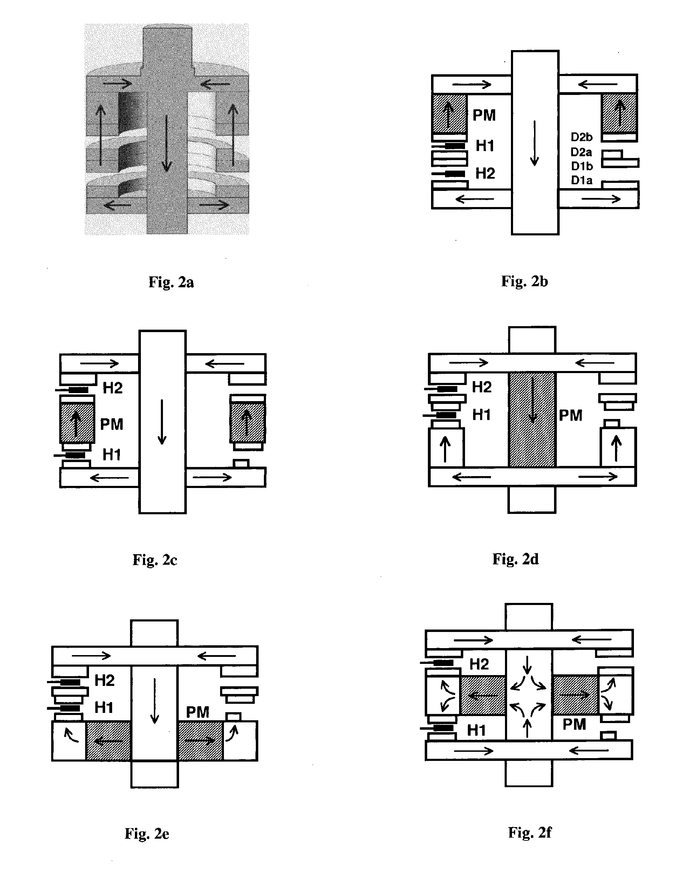

For the magnetic circuit configurations depicted in figures 1a to 1d, the only moving part is ring D, whereas the permanent magnet and the Hall probes are held in fixed positions. It is also possible to devise configurations characterised in that only the Hall probes are held in fixed positions, while the permanent magnet and the magnetic circuit are all part of a rotating assembly. An example of said rotating assembly is shown in figure 2a, depicting a perspective view of a cross-section (non-magnetic spacers utilised to fix the two central rings to the shaft are omitted for clarity), and for which figure 2b schematically represents the same cross-section. PM is an axially magnetised ring magnet, and D1a to D2b four rings of ferromagnetic material whose geometric parameters vary along the circumference. The magnetic circuit is then closed via the central shaft, also made of ferromagnetic material (alternatively, the magnetic circuit may also be closed via a tube, made of ferromagnetic material, surrounding said shaft). Said rings of ferromagnetic material are then arranged as to obtain a **"B1/B2 Ratio"** function of the angular position $\theta$. Also for this type of rotating magnetic assembly solution the present invention is not concerned with the particular shapes that rings D1a to D2b might take, as several different shapes may exist, but that all yield the same form for the output function. It is for example possible to held constant the geometry of the airgap defined by D1a and D1b (or D2a and D2b), and vary the geometry of the other airgap, defined by D2a and D2b (or D1a and D1b), in a suitable way as to obtain a **"B1/B2 Ratio"** corresponding to the desired function of $\theta$. Alternatively, it is also possible to obtain the desired dependence on $\theta$, of the **"B1/B2 Ratio"**, by varying in suitable ways the geometry of both airgaps, instead of just one.

Figure 2c depicts a configuration similar to the one of figure 2b, but where the two circular airgaps are located on opposite sides of the ring magnet.

For the configuration of figure 2d the permanent magnet is instead a cylindrical bar placed along the central shaft. Said bar may also be of a hollow type, surrounding a central shaft made of a material, which, in such case, would not be ferromagnetic.

Figures 2e and 2f depict configurations characterised in that the permanent magnet is magnetised along the radial direction.

All of the magnetic circuit configurations described above refer to the measurement of angular positions. For those skilled in the art it is a trivial task to convert said configurations to the measurement of linear positions: just ideally cut all of the ring shaped components along one radius and ideally straighten them. The resulting straighten configurations are then suitable for the measurement of linear displacements.

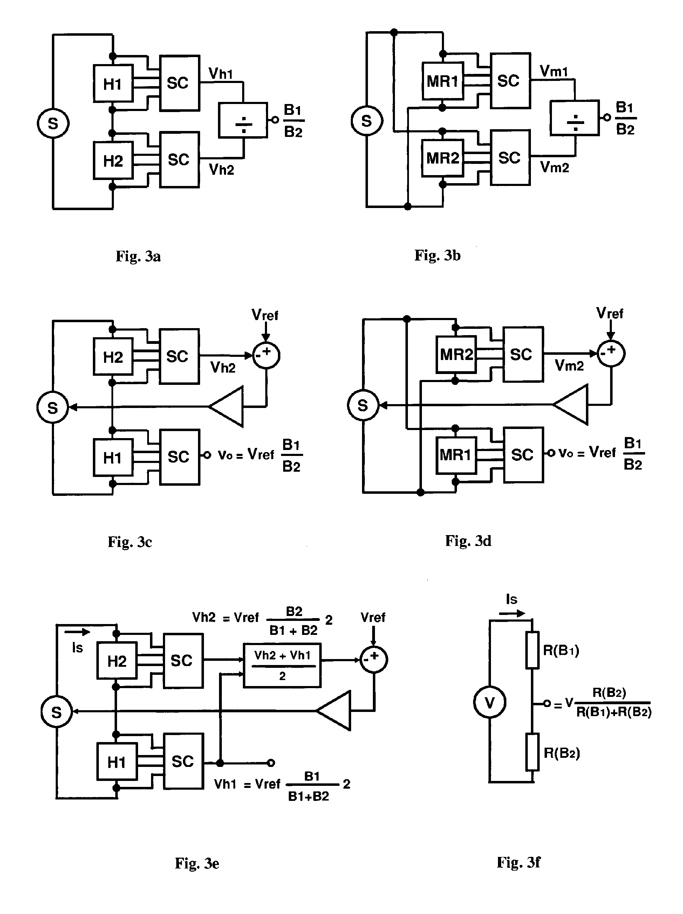

In order to obtain an electrical signal proportional to the **"B1/B2 Ratio"** it is then necessary to implement some sort of electronic signal processing. Figure 3a schematically represents an example of signal processing chain:

- H1 and H2 are two linear Hall effect probes, such as for example Infineon's KSY14.
- S is used to serially supply H1 and H2 with the same biasing current, 1b, and hence preference would be given to a current source, although a stable voltage source would also be suitable (as variations in biasing current are automatically compensated for when computing the ratio Vh1 / Vh2 of the two signals).
- SC represents a Signal Conditioning network, for example of the passive or active types as usually suggested in the applications notes of the sensor manufacturers, and which is necessary in order to compensate for the inherent offset voltage of the Hall probes, as well as to calibrate for any residual mismatch of their respective sensitivities.
- The generated Hall voltages, Vh1 and Vh2, are then fed to a divider circuit, which might be chosen among the many well-known analogue or digital types, to finally generate an output signal proportional to the "**B1/B2 Ratio**".

Figure 3b schematically depicts a signal processing chain suitable for magnetoresistive bridge type of sensors (MR1 and MR2). For most commercially available magnetoresistive bridges, the output signals, Vm1 and Vm2, are proportional to the supply voltage, rather than to the biasing current. Hence, in such case S would be a voltage source, used to parallel supply both magnetoresistive bridges.

It shall now be remarked that Hall effect and magnetoresistive sensors have recently become commercially available that include said Signal Conditioning circuitry, SC, co-packaged with the sensor itself. In particular, referring to integrated sensors of the Hall effect type, the integrated signal conditioning is usually arranged as to generate an output signal that is proportional to the supply voltage (examples are Infineon's TLE499x type of ratiometric linear Hall sensors), rather than to the supply current. Said type of ratiometric linear Hall sensors would therefore need to be parallel supplied, in the same way as already indicated in Figure 3b for magnetoresistive bridge type of sensors.

The signal conditioning chains schematically represented in figures 3a and 3b both make use of a divider circuit to generate an output voltage proportional to the "**B1/B2 Ratio**". Said divider circuit can be implemented using any of the commercially available divider integrated circuits, or it can also be implemented by means of digital techniques, such as for example a conventional microcontroller implementing an analogue to digital conversion followed by the actual computation of the ratio between the two digital values so obtained. In case required by the application, the digital quotient obtained could then be converted back to the analog domain by means of digital to analog conversion.

Alternatively, a simpler and very convenient way to generate such an output voltage is schematically represented in figure 3c:

- A feedback loop compares the output of one of the sensor, for example Vh2, with a reference voltage Vref;
- The error voltage, Vref - Vh2, is then used to proportionally regulate the voltage controlled source S (whether it be of a current or voltage source type), aiming to obtain a steady state condition characterised in that Vref = Vh2, and resulting hence in a steady state value for the biasing current defined by Ib = Vref / (Kh2 * B2)

Hence, thanks to said feedback loop, the output of the other sensor, $v_0$, will directly yield a voltage proportional to the "**B1/B2 Ratio**":

$$v_o = Kh1 / Kh2 \ast Vref \ast B1 / B2 = Vref \ast B1 / B2 \qquad (7)$$

Note that Kh1 / Kh2 = 1 (as assumed in figure 3c) only for the ideal case of sensors with matched, or calibrated, sensitivities. Incidentally, equation 7 suggests that by adjusting Vref, for example during factory calibration, it is possible to finely calibrate against any inherent mismatch between the sensitivities of the two sensors, while defining at the same time the overall gain of the sensor. The feedback loop depicted in figure 3c, whereby the two Hall probes are connected in series, is ideally suited for simple linear Hall effect probes, such as for example the KSY14 from Infineon.

The feedback loop depicted in figure 3d, whereby the two sensors are connected in parallel, is instead better suited for magnetoresistive bridge sensors as well as for ratiometric linear Hall sensors, such as for example the already mentioned Infineon's TLE499x types.

With reference to the sensor configurations described above, it can be remarked that from a manufacturing point of view it turns out very convenient to design the geometries of the two airgaps in such a way that:

- One of the two airgaps is designed to result in a B value reproducing the desired function of angular position, and which we will call **Variable Airgap**.
- The other airgap is designed to result in a B value as uniform as possible along the circumference spanning the required range of angular positions, and which we will call

**Reference Airgap**.

Referring to Figures 3c and 3d, best accuracy can be achieved when sensor H2 (or MR2) is placed in the **Reference Airgap**, whereas sensor H1 (or MR1) is placed in the **Variable Airgap**. For output functions symmetrical with respect to 180°, such as for example triangle or sinus functions, the mechanical design can further be simplified by suppressing the **Reference Airgap**, and replacing it with a **Virtual Reference Airgap** built as follows:

-    the magnetic field sensor that was located in the **Reference Airgap** is now moved to the **Variable Airgap**, but at a position diametrically opposed (i.e.: 180°) to the other sensor.
-    The mean of the B values measured by the two sensors, (B1+B2)/2, is a constant independent from angular position, which can then be used as a **Virtual Reference Airgap** functionally equivalent to the former **Reference Airgap.**

Figure 3e depicts a signal conditioning and processing circuitry suitable for the **Virtual Reference Airgap** approach. A signal proportional to the magnetic field measured in the **Virtual Reference Airgap, Bvirtual,** is obtained by adding, and then dividing by two, the signals from the two magnetic field sensors, now located in the same airgap, at diametrically opposed angular positions. The skill in the art would typically realise such (Vh1+Vh2)/2 function by means of a operational amplifiers in conventional adder configurations. As in figure 3c (3d), the feedback loop will then react to hold (Vh1+Vh2)/2 = Kh*Ib*(B1+B2)/2 = Kh*Ib* **Bvirtual** (considering matched probes with Kh1=Kh2=Kh) at a constant value determined by Vref. Similar considerations apply when using magnetic field probes ratiometric with respect to the supply voltage, in which case H1 and H2 will be supplied in parallel rather than in series (as it was instead the case for figure 3e).

For all purposes of compensating against temperature and aging drifts of magnet and magnetic field sensors characteristics, such a feedback loop built around the **Virtual Reference Airgap** is as effective as one built around a **Reference Airgap**, in both cases being the effects of said drifts substantially removed from the output signal. More precisely, said drifts are still present, but their effects have now been moved, through the action of the feedback loop, to the common supply of the two magnetic field probes.

It shall now be reminded that the just described **Virtual Reference Airgap** approach, being applicable to output functions symmetrical with respect to 180° (examples are sinusoidal and symmetric triangular functions), whenever it is necessary to resolve the already described -180° to 0° and 0° to + 180° ambiguity requires a third magnetic field probe, H3, located at a third angular position (typically 90°) with respect to H1 and H2. Alternatively, for a most accurate compensation, said third magnetic field probe could be replaced by a second couple of diametrically opposed probes. Of course, for proper compensation also sensor H3 will need to be supplied by the same supply current as H1 and H2, and in figure 3e it will hence appear connected in series to both them (or in parallel for magnetic field probes ratiometric to the supply voltage). If a second couple of diametrically opposed probes is instead used, then it can be supplied in the same way but on its own, independently from the supply of the first couple of probes.

For those applications where accuracy can be sacrificed in favour of simplicity of design, and hence reliability, the extremely simple circuit shown in figure 3f represents an interesting alternative. R(B1) and R(B2) are two simple magnetoresistors (i.e. their resistances are functions of B) connected as a resistive divider. The output signal generated by each magnetoresistive sensor is hence function of both the common supply current, Is in fig. 3f, and the applied magnetic field B:

$$v_o = Is * R(B2) = V * R(B2) / (R(B2)+R(B1)) = V / ( 1 + R(B1) / R(B2)) \qquad (8)$$

Likewise the active feedback loop of figure 3e, and which adjusted the common supply current to two serially connected Hall probes in order to hold at a constant value the sum of the output signals generated by said probes, the intrinsic feedback loop, obtained thanks to the supply voltage V being held constant, of the resistive divider configuration of figure 3f also results in the automatic adjustment of the common supply current, Is, in such a way that the sum of the output signals generated by said magnetoresistive probes is held at a constant value. The practical problem encountered when using magnetoresitive type of sensors is typically represented by non-linearities in the function R(B). Thus, said resistive divider configuration is mainly suitable for those applications whereby an extremely simple design, and thus low cost, can be traded off with somewhat lower accuracies (depending on the actual extent of said sensor's non-linearities).

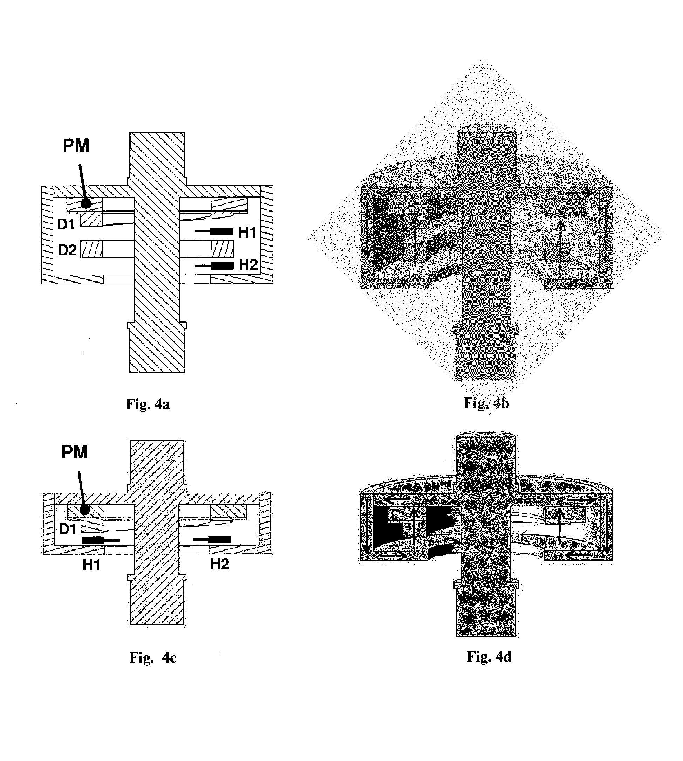

For all the sensor configurations depicted in figures 2a through 2f most of the magnetic flux generated by the permanent magnet is closed radially through the shaft (the arrows describe the main path followed by the magnetic flux, leakage paths are not represented). There are however instances where it is instead desirable to have most of the magnetic flux closing radially through an external cylindrical path, rather than through the shaft. Examples are those applications requiring a hollow shaft so that too small a cross-section would be available for closing the flux without magnetic saturation effects, or applications where it is desirable to better screen the magnetic field probes against the presence of magnetic fields external to the sensor. Figure 4a represents a cross-section (to aid understanding, figure 4b depicts a perspective view of the same section) of an example of just such a configuration, and which is equivalent to that of figure 2a, the difference being that now the magnetic flux is closed through the external cylindrical wall, and that the **Variable Airgap** is obtained by varying the thickness of ring D1, rather than the width of D2a as it was the case in figure 2a. Ring D2 serves the purpose to render as uniform as possible the magnetic field measured by H2 (or MR2) in the **Reference Airgap**. All the parts of this rotary magnetic circuit are fixed relatively to the central shaft (a non magnetic spacer fixing D2 to the shaft is omitted for clarity). Figures 4c and 4d depict the same configuration as in figures 4a and 4b, but after suppressing the **Reference Airgap**, and relocating H2 to the **Variable Airgap** at an angular position diametrically opposed to H1. The **Reference Airgap** is then replaced by the **Virtual Reference A**i**rgap**, built by taking the mean value of the B values measured by H1 and H2. For clarity, figure 4c does not show the third magnetic field probe (or alternatively the second couple of probes) used to resolve the -180° to 0° and 0° to + 180° ambiguity.

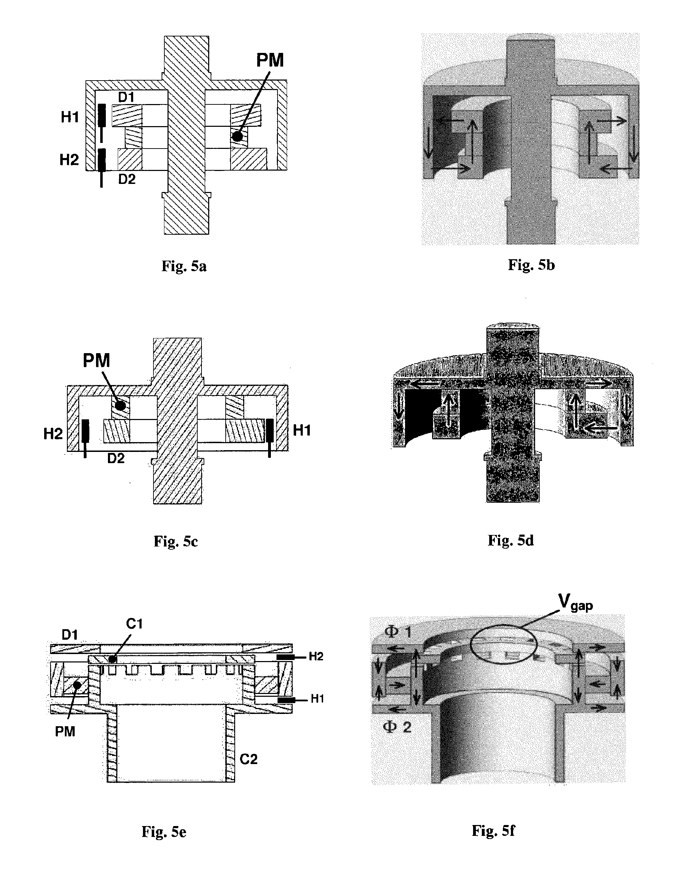

Figures 5a and 5b describe a configuration convenient for those applications where it might be desirable to mount the magnetic field probes parallel to the central shaft, rather than perpendicularly to it. H1 is located in the **Reference Airgap**, whereas H2 is located in a **Variable Airgap** obtained by varying the radial width of ring D2 as a function of angular position. The **Virtual Reference Airgap** version of this last configuration is depicted in figures 5c and 5d. For clarity, figure 5c does not show the third magnetic field probe (or alternatively the second couple of probes) used to resolve the -180° to 0° and 0° to + 180° ambiguity.

Concerning the parallel magnetic circuit configuration of figure 1b, for some applications it might be convenient to adopt a geometry such that the magnetic field probes H1 and H2 are located in airgaps of constant geometry, as to minimise cross-talk effects and non-linearities resulting from leakage flux and border effects whose impact would otherwise also vary with position. The task of varying the overall reluctance of a parallel branch of the magnetic circuit is then transferred to a third airgap of variable geometry, which can now be optimised free from the constraints imposed by the need to reserve some space for mounting a magnetic field probe. Figure 1e schematically represents such an approach, whereby the airgaps surrounding H1 and H2 are now of a constant geometry, while the task of varying the reluctance of the parallel branch crossed by flux $\phi$2, is now delegated to a specialised variable airgap, $V_{gap}$, whose geometry is designed to vary with position in such a way the "**B1/B2 Ratio**" corresponds to the desired function of position.

An interesting application of such an approach is the measurement of small relative angular displacements of two rotating elements, such as for example in torque sensors. A very common way to measure torque consists in measuring the relative angular displacement of two shafts coaxially connected by a torsion bar. Figure 5e depicts the cross section of a rotary magnetic circuit configuration optimised for just this type of measurements, while figure 5f illustrates its perspective view, which helps in understanding the radial paths followed by the magnetic flux generated by the permanent magnet. The principle of operation is as follows:

- the permanent magnet, PM, is radially magnetised, and it generates a magnetic flux that then splits into two parallel branches: $\phi$1 and $\phi$2;
- the variable gap, $V_{gap}$, of figure 1e is in this case of a circular design, and it is realised by means of a crown, C1, featuring a plurality of teeth, and which can rotate relatively to the corresponding teeth machined on part C2, so that a small relative angular displacement between C1 and C2 will result in a variation of the overall reluctance of the parallel branch crossed by $\phi$1;
- all parts, except C1, are fixed to C2 by means of suitable non-magnetic spacers (not shown for clarity), and they will hence rotate together with C2, this in order to minimise effects resulting from eddy currents which would be induced at high speed operation, but it otherwise does not need to be so for low speed applications;
- ring D1 closes the path for flux $\phi$1 making also sure that the B value measured by H2 is as uniform as possible along the corresponding circumference, as it is the case for the B value measured by H1;
- H1 and H2 are not rotating, but they are fixed to the external printed circuit board featuring the signal conditioning and processing electronics;
- when C1 and C2 both rotate at the same angular rate, and without any *relative* angular displacement, then the "**B1/B2 Ratio**" will correspond to a well defined value, independent from the *absolute* angular position along the full 360° arc;
- when C1 and C2 still rotate at the same angular rate, but now with some amount of *relative* angular displacement, then the "**B1/B2 Ratio**" will still correspond to a well defined value, which will still be independent from the *absolute* angular position along the full 360° arc, but now such well defined value will be different from the one measured at zero *relative* angular displacement;
- for torque measurement applications crown C1 would typically be coupled to a first shaft, while C2 to a second shaft coaxial with the first one, and said two shafts will then be coupled by means of a torsion bar calibrated to yield a relative angular displacement (just few degrees, typically) function of the applied torque.

The inventive step of this invention shall be understood as independent from any detailed choice of the geometry defining the form of the "**B1/B2 Ratio**" function, rather it consists in the more general idea of arranging the geometry of a magnetic circuit in such a way that the measurement of angular (or linear) displacements can be carried out by computing the *ratio* between magnetic field values measured at two different locations, making it hence largely independent from variations in temperature or from drifts in the working point of the permanent magnet.

## Claims

1.   A method of contactless measuring angular displacements by computing a function of the output signals of two magnetic field sensors (H1, H2) placed at two different locations in a circular airgap of a rotating magnetic circuit assembly composed by ring shaped parts (D2) surrounding a central shaft and surrounded by an external cylindrical tube serving the purpose to provide an outer path for the radial closing of the magnetic flux; wherein the airgap is located between said ring shaped parts and said external cylindrical tube; said method further comprising the step of using two magnetic field sensors to measure values Vh1 and Vh2 proportional to the magnetic fields B1 and B2, at said two locations, the radial width of said airgap varying along the circumference by a variable geometry of said ring shaped parts such that the sum B1+B2 is independent of said angular displacement; whereby the geometry of said magnetic circuit is arranged to convert the displacement to be measured into a corresponding variation of B1 and B2; wherein said rotating magnetic circuit assembly further comprises a ring shaped permanent magnet (PM) rotating with said magnetic circuit, and a signal-processing electronic circuitry;
said method further comprising the step of processing the signals generated by said magnetic field sensors to produce the sum Vh1+Vh2; said sum Vh1+Vh2 is then used in a feedback loop arranged to control the biasing current or the supply voltage common to both of said magnetic field sensors in such a way that said sum Vh1+Vh2 is kept constant at a reference voltage and consequently the output voltage of one of said magnetic field sensors becomes proportional to B1/(B1+B2) and the other of said magnetic field sensors becomes proportional to B2/(B1+B2).

## Patentansprüche

1.   Verfahren zur kontaktlosen Messung von Winkelverschiebungen durch Berechnen einer Funktion der Ausgangssignale von zwei Magnetfeldsensoren (H1, H2), die an zwei verschiedenen Stellen in einem kreisrunden Luftspalt einer rotierenden Magnetkreisbaugruppe positioniert sind, die aus ringförmigen Teilen (D2) zusammengesetzt ist, die einen mittleren Schaft umgeben und von einem äußeren zylindrischen Rohr umgeben sind, das dazu dient, einen äußeren Weg für den radialen Schluss des Magnetflusses bereitzustellen; wobei der Luftspalt sich zwischen den ringförmigen Teilen und dem äußeren zylindrischen Rohr befindet; wobei das Verfahren überdies den Schritt umfasst, zwei Magnetfeldsensoren zu verwenden, um an den zwei Stellen Werte Vh1 und Vh2 proportional zu den Magnetfeldern B1 und B2 zu messen, wobei die radiale Breite des Luftspalts entlang des Umfangs um eine variable Geometrie der ringförmigen Teile derart variiert, dass die Summe B1 + B2 unabhängig von der Winkelverschiebung ist; wobei die Geometrie des Magnetkreises angeordnet ist, die zu messende Verschiebung in eine entsprechende Variation von B1 und B2 umzuwandeln; wobei die rotierende Magnetkreisbaugruppe überdies einen ringförmigen Permanentmagneten (PM) umfasst, der mit dem Magnetkreis rotiert, und eine singnalverarbeitende elektronische Schaltung;
wobei das Verfahren überdies den Schritt umfasst, die von den Magnetfeldsensoren erzeugten Signale zu verarbeiten, um die Summe Vh1 + Vh2 zu bilden; die Summe Vh1 + Vh2 wird dann in einer Rückkopplungsschleife verwendet, die angeordnet ist, den Vormagnetisierungsstrom oder die gemeinsame Versorgungsspannung der beiden Magnetfeldsensoren derart zu steuern, dass die Summe Vh1 + Vh2 bei einer Referenzspannung konstant bleibt und daraus folgend die Ausgangsspannung eines der Magnetfeldsensoren proportional zu B1/(B1 + B2) wird und der andere der Magnetfeldsensoren proportional zu B2/(B1 + B2) wird.

## Revendications

1.   Procédé de mesure sans contact de déplacements angulaires, par calcul d'une fonction des signaux émis par deux capteurs de champ magnétique (H1, H2) disposés à deux emplacements différents dans un entrefer circulaire d'un ensemble de circuit magnétique rotatif composé de pièces annulaires (D2) entourant un arbre central et entourées par un tube cylindrique externe dont la fonction est de fournir une voie extérieure pour la fermeture radiale du flux magnétique ; l'entrefer étant situé entre lesdites pièces annulaires et ledit tube cylindrique externe ; ledit procédé comprenant en outre l'opération consistant à employer deux capteurs de champ magnétique pour mesurer des valeurs Vh1 et Vh2 proportionnelles aux champs magnétiques B1 et B2, auxdits deux emplacements, la largeur radiale dudit entrefer variant le long de la circonférence selon une géométrie variable desdites pièces annulaires de manière que la somme B1+B2 soit indépendante dudit déplacement angulaire ; moyennant quoi la géométrie dudit circuit magnétique est conçue pour convertir le déplacement à mesurer en une variation correspondante de B1 et B2 ; ledit ensemble de circuit magnétique rotatif comprenant en outre un aimant permanent (PM) annulaire tournant avec ledit circuit magnétique, et un circuit électronique de traitement de signaux ;

ledit procédé comprenant en outre l'opération consistant à traiter les signaux générés par lesdits capteurs de champ magnétique pour produire la somme Vh1+Vh2 ; ladite somme Vh1+Vh2 est ensuite utilisée dans une boucle de rétroaction conçue pour commander le courant de polarisation ou la tension d'alimentation qui sont communs aux deux capteurs de champ magnétique de telle manière que ladite somme Vh1+Vh2 soit tenue constante à une tension de référence et que, par conséquent, la tension de sortie de l'un desdits capteurs de champ magnétique se retrouve proportionnelle à B1/(B1+B2) et celle de l'autre desdits capteurs de champ magnétique se retrouve proportionnelle à B2/(B1+B2).

Fig. 1a

Fig. 1b

Fig. 1c

Fig. 1d

Fig. 1e

Fig. 1f

Fig. 2a

Fig. 2b

Fig. 2c

Fig. 2d

Fig. 2e

Fig. 2f

**Fig. 3a**

**Fig. 3b**

**Fig. 3c**

**Fig. 3d**

**Fig. 3e**

**Fig. 3f**

Fig. 4a

Fig. 4b

Fig. 4c

Fig. 4d

Fig. 5a

Fig. 5b

Fig. 5c

Fig. 5d

Fig. 5e

Fig. 5f

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0798541 A1